# EUROPEAN PATENT SPECIFICATION

(11) **EP 3 729 234 B1**
(45) Date of publication and mention of the grant of the patent: **07.06.2023**
(21) Application number: 18829953.1
(22) Date of filing: 21.12.2018
(51) Int. Cl.: G06F 3/01

(54) **HUMAN INTERACTIONS WITH MID-AIR HAPTIC SYSTEMS**
MENSCHLICHE INTERAKTIONEN MIT HAPTISCHEN SYSTEMEN IN DER LUFT
INTERACTIONS HUMAINES AVEC DES SYSTÈMES HAPTIQUES EN VOL

(30) Priority: 22.12.2017 US 201762609621 P; 10.04.2018 US 201862655795 P
(43) Date of publication of application: 28.10.2020
(73) Proprietor: Ultrahaptics IP Ltd, Bristol BS2 0EL (GB)
(72) Inventor: WREN, William, Bristol BS2 0EL (GB); KAPPUS, Brian, Bristol BS2 0EL (GB); LONG, Benjamin John Oliver, Bristol BS2 0EL (GB); DEELY, Simon, Bristol BS2 0EL (GB)
(74) Representative: Latham, Stuart Alexander
(86) International application number: PCT/GB2018/053738
(87) International publication number: WO 2019/122915

(56) References cited:
- CN-A- 107 340 871
- US-A1- 2010 199 232
- US-B1- 6 771 294
- TOM CARTER ET AL: "UltraHaptics", PROCEEDINGS OF THE 26TH ANNUAL ACM SYMPOSIUM ON USER INTERFACE SOFTWARE AND TECHNOLOGY, UIST '13, 1 January 2013 (2013-01-01), pages 505-514, XP055159967, New York, New York, USA DOI: 10.1145/2501988.2502018 ISBN: 978-1-45-032268-3
- SEAN GUSTAFSON ET AL: "Imaginary phone", PROCEEDINGS OF THE 24TH ANNUAL ACM SYMPOSIUM ON USER INTERFACE SOFTWARE AND TECHNOLOGY : OCTOBER 16 - 19, 2011, SANTA BARBARA, CA, USA, ACM, NEW YORK, NY, 16 October 2011 (2011-10-16), pages 283-292, XP058006125, DOI: 10.1145/2047196.2047233 ISBN: 978-1-4503-0716-1

## Description

### RELATED APPLICATIONS

This application claims the benefit of the following two U.S. Provisional Patent Applications
1) Serial No. 62/609,621, filed December 22, 2017; and
2) Serial No. 62/655,795, filed April 10, 2018.

### FIELD OF THE DISCLOSURE

The present disclosure relates generally to human interactions with acoustically-driven mid-air haptic systems.

### BACKGROUND

A continuous distribution of sound energy, referred to as an "acoustic field", can be used for a range of applications including haptic feedback in mid-air.

In this acoustic field, one or more control points can be defined. These control points can be amplitude modulated with a signal and as a result produce vibrotactile feedback in mid-air. An alternative method to produce feedback is to create control points that are not modulated in amplitude and move them around spatially to create spatio-temporal modulation that can be felt.

With sufficient actuated surface area, the mid-air haptic technology may be scaled up. Rather than reaching into a region of space that can be actuated, all of the local space that the user occupies may be on demand populated with mid-air haptic effects. In this scenario, much of the existing wisdom about haptic effects is inapplicable. Having a viable approach to producing a human-machine interface in this scenario is valuable.

Further, as mobile technology advances towards Augmented-Reality, Virtual-Reality and Mixed-Reality Head-Mounted Displays, no methods exist to continue the established haptics associated with gestures and productivity developed for the mobile phone and tablet technology space. Once the major features of the phone or tablet are moved into the head mounted device, there will be no handheld device which can create standard mechanically-coupled haptics. While the graphics can be displayed/projected onto a virtual device in mid-air (possibly being held in the hand or on the body), without a peripheral device such as a haptic glove or armband, there is no good method for delivering haptic sensations that remove the need for a device either in/on the hand or on the body.

These gestures need to be recognized in a fast, efficient manner to provide timely visual and haptic feedback. Camera technology is extensively employed but is limited in capture rate, requires extensive computing, and is often high-latency. Wearables are inconvenient and can be bulky. Wearable ultrasound arrays can provide a high-speed signal which can be used to provide independent or supplemental hand-tracking. Document TOM CARTER ET AL: "UltraHaptics", PROCEEDINGS OF THE 26TH ANNUAL ACM SYMPOSIUM ON USER INTERFACE SOFTWARE AND TECHNOLOGY, UIST '13, 1 January 2013, pages 505-514, XP055159967, uses an array of transducers positioned below a touch screen to generate focal points on a hand that simulate a feedback/guide created by the screen so that the user can control the screen without touching it. Hand, array and focal points tracking/updating are also disclosed in this document. Patent publication CN 107 340 871 A uses ultrasonic haptic signals sent on the user hand as a feedback in response to a hand gesture of the user.

### SUMMARY

Interacting with a haptics system in a volume in which any part of the volume may be enhanced with interactive haptic feedback is an unknown. In this application, a number of different strategies for managing an 'always on' solution and its implications are addressed.

Further, ultrasound transducer arrays may be mounted on a person (such as on a head mounted display or other wearable accessory). This array will utilize some form of 6 degree of freedom tracking for both the body and hands of the users. Using this tracking data, the arrays may coordinate to project focused acoustic pressure at specific locations on moving hands such that a touch sensation is simulated. A person holding their palm like a tablet or phone will be able to experience haptics in a similar fashion to a person holding a physical device and engaging in identical gestures and interactions. Using wearable microphones, the ultrasonic signal reflected and transmitted into the body can be used for hand and gesture tracking.

### BRIEF DESCRIPTION OF THE FIGURES

The accompanying figures, where like reference numerals refer to identical or functionally similar elements throughout the separate views, together with the detailed description below, are incorporated in and form part of the specification, serve to further illustrate embodiments of concepts that include the claimed invention and explain various principles and advantages of those embodiments.
Figure 1 shows a holding of a handheld device.
Figure 2 shows example handheld gestures to emulate with mid-air haptics.
Figure 3 shows hand-based interaction with haptics.
Figure 4 shows hand-based interaction without haptics.
Figures 5A and 5B show two-handed configurations to measure finger gestures.
Figure 6 shows finger-on-palm tracking.
Figure 7 shows closed-palm gestures.

Skilled artisans will appreciate that elements in the figures are illustrated for simplicity and clarity and have not necessarily been drawn to scale. For example, the dimensions of some of the elements in the figures may be exaggerated relative to other elements to help to improve understanding of embodiments of the present invention.

The apparatus and method components have been represented where appropriate by conventional symbols in the drawings, showing only those specific details that are pertinent to understanding the embodiments of the present invention so as not to obscure the disclosure with details that will be readily apparent to those of ordinary skill in the art having the benefit of the description herein.

### DETAILED DESCRIPTION

### I. Ubiquitous Mid-Air Haptic Feedback

### A. Asserting control

When a user in a space that may actuated with haptics requires a connection to the machine, they must perform a specific gesture to get the machine to "listen" to their gestural commands. This gesture is necessary to provide a gateway for the user to access the service and can be customized by the user. This gesture may also be unique for each user and demonstrate to the machine with which user it is interacting and, therefore, behave according to their preferences. When this has been achieved, a "ready" signal, in the form of a mid-air haptic effect, is broadcast onto the hand signaling that the system has changed into a gesture control mode. This mid-air haptic effect may also be configured and re-assigned by each user. Further interaction with the machine may be then conducted using hand gestures. Gestures may be used to transfer control onto another device on which more precise commands may be obtained, in which case the "ready" signal turns off as the system moves out of gesture control mode.

In gesture control mode, each user should be able to "pin" certain devices to gestures such that the system can reduce the amount of energy and cognitive bandwidth that needs to be expended by the user to perform an action corresponding to a command. Certain volumes of space may be coupled to nearby objects. For passive objects, this allows the system to provide location services and haptics to the user to misplaced objects, teaching the user how best to use an item or simply to hint at the object in an eyes free fashion. For objects actively engaged with the system, such as third-party electronic devices and systems, these can have haptic effects that accompany and are associated with them, to both send and receive information and events both to and from the user. These mid-air haptic effects may be configurable and may be reassigned by each user. Each device may have "pinned" interactions where each command has a gesture and mid-air haptics associated with it that captures a task. This task may be determined and mapped automatically to a cognitively light gesture by considering the most common tasks associated with a given third-party system or device. This can be viewed as automatically constructing a mapping between tasks and gestures that is similar to a Huffman code in which common tasks are assigned simple gestures whereas rare tasks are assigned gestures that are more complex.

A selection gesture may be performed by the user to assert control over a particular device or appliance. This gesture can involve a remote form of selection such as pointing, or another method of gesturally selecting an area or volume which is tied to the application, device or appliance in question. On recognition of the selection, a haptic response is elicited so that the user is aware that the selection has occurred. This may be differentiated from other nearby 'active' regions by a difference in haptic effect. If the nearby region is inactive, then there may be no haptic effect there, or a generic active effect corresponding to the readiness of the machine to accept gesture input.

### B. Event notifications

Further, if a user is contained within the space, then mid-air haptic feedback may be used to create event notifications. These may be configurable to convey different information using different mid-air haptic effects. A periodically modulated modulation on the mid-air haptic effect may be used to produce an "alarm" notification. A mid-air haptic notification which conveys a warning, may, after a period of time or if other conditions are met, break into other sensory modalities. Event notifications may be configured by the user to be applicable to individual identified and authenticated users only in a discreet fashion, or to broadcast to everyone in the space.

A "dismiss" gesture may be used to dismiss the event notification, once it has occurred. The event conveyed by the mid-air haptic system may be configured to stop without intervention or to continue to persist until it is explicitly dismissed in this or in another way. The dismiss action may be configured to require the dismissal of all users in the space, due to for example a notification of some change, or be satisfied with the action of a single user. In the single user case, the notification may be a request for action, which would cause the dismiss to also have an "accept" gesture to change into either a mode in which a new event notification requires the user to further act before dismissal may occur, be transferred into another sensory modality, actuate another system or schedule further events. The "dismiss" action may be configured to provide deferral of the mid-air haptic event notification until a later time, such as in the case of a timer alarm notification. Such a notification system is not limited to communication through purely haptic stimuli. Further senses, including the application of parametric audio through the system, may be used to augment and stimulate further to provoke the user into a state of awareness and responsiveness.

### C. External Influences

If a user is contained within a space in which haptics may be actuated, then mid-air haptic feedback may be used to communicate the state of external variables. By modifying the haptic effect using an external variable as input to a function that generates a haptic feedback pattern, the user may (for instance) be able to determine whether the front door is locked, the amount of time remaining on a washing cycle or the price of a product.

This may be designed in the form of a haptic template that takes in such variables as parameters. The types of these variables may include (but are not limited to) Boolean variables, members of a set of options and real values. Each template may be based on one or more of these variables to create feedback that changes across the range of the variable. The way in which these templates interpret the input values may also be modified by the user to allow for the customization of the device. The templates may be defined in a coordinate space that may be global, relative to the position in which the haptics has been "pinned," relative to the hand as a whole, the palmar surface, any finger bone or finger surface, or a combination of the foregoing to facilitate warping of the template to fit the hand shape.

The haptic feedback may also be modified by environmental factors for the purposes of optimizing the feedback. For instance, as the speed of sound increases due to temperature and humidity, the haptic point increases in distance from the device. This is because as the number of wavelengths travelled is the same, the wavelength is longer. By modifying the relative distance from the device in wavelengths, the haptic point may be normalized to a consistent measurable distance. Equally, the temperature will affect the sensitivity of the human hand. By modifying the strength of the feedback, the numbing effects of cold may be counteracted.

### II. Body-Mounted Ultrasonic Haptic Solutions

### A. Drawbacks of Prior Solutions

1. Gloves with actuators have hygiene issues and limited accuracy.
2. Fixed-position mid-air haptics have the limitation of a "desktop" experience with a fixed location for the area, showing a limited zone of haptic interaction.
3. Compressed air vortices ("smoke rings") may be injected into the air and felt at a distance. These projectors are bulky mechanical devices which need to be steered my mechanical actuators. Besides their size, the biggest drawback in a shifting environment is their high latency. The vortices only travel in air at a few meters per second. A user can easily move in the time it would take for the vortices to travel from source to user. As a result, this is only really suitable for fixed location experiences with predictable interactions (such as a slow-moving ball which the user moves towards, not a reactive interaction). If mounted onto a user, the effect is compounded as the interaction is anchored to the user and haptic locations need to be determined as much as 0.5 s in advance. This latency will cause misses or unintentional feedback with only minimal movement. Wearable ultrasonic arrays create haptics that move at the speed of sound (300+ m/s), virtually eliminating any latency on a human length-scale. In addition, theoretical transducer sizes can be extremely small (mm), allowing easy integration in a variety of wearable form-factors.
4. The following article
   http://www.damngeeky.com/2013/05/30/11576/virtual-projection-keyboard-technology-with-haptic-feedback-on-palm-of-your-hand.html states:
   "3D projection systems and interfaces are going to be the future of technology implied in gizmos and gadgets which already are an integral part of our life. Just like the 3dim Tech's gesture control technology, the design team over at University of Tokyo headed by professor Masatoshi Ishikawa and Hiroyuki Shinoda have developed an interface system that projects a virtual keyboard or any other interactive display on your hand, paper or any other random surface for providing input to your gadget(s). Powered by around 2,000 ultrasonic wave emitters that provide haptic feedback for action or pressure on the keyboard keys that are virtually projected on your hand, the new technology has immense potential for the future. It means that you'd be able to operate your computer, smartphone, tablets or any other gadget from any location in the company office or home. The technology is a long way from completion yet as it has still 5 years to go before we would see a commercial application rolled out to the public but it looks good enough so far."

This article details a user interface projected onto the palm and a fixed ultrasonic array providing haptic feedback. The differences between the article and the approached described herein include:
a. The article states that the user interface was generated by a projector. The approach described herein proposes using graphics provided by a head-mounted display (AR or VR).
b. It is not clear from the article that the interface projected changes with user input. The approach described herein would dynamically change with such user input (buttons would change, text would scroll, etc.).
c. The interface shown in the article seems to only provide for a "button" gesture. The approach described herein proposes providing feedback for a wide variety of touch-based gestures.
d. The approached described herein proposes providing feedback for gestures meant to control screens/interfaces, not necessarily projected onto the palm.
e. The approached described herein proposes methods to use a wearable array which updates using tracking information to provide this feedback.
f. The ultrasonic device shown in the article likely could only create one focal point at a time. The approached described herein can create and control an arbitrary number and/or complete acoustic fields.
g. The article does not discuss using the ultrasound as a means to track touch using a wearable microphone.

### B. Body-Based Haptic Devices

The approached described herein has established robust methods for manipulating ultrasonic phased arrays. Focusing the acoustic energy can generate accurate and dynamic haptics on static and moving targets. The goal of the proposed method is to extend this mid-air haptic capability to include the targeting of users who are mobile and possibly wearing head-mounted displays. In addition to fixed location arrays, this method allows for arrays to also be mounted on users and in areas to target mobile users. Body parts can be used as reflective and interactive haptic surfaces. Additionally, the acoustic signals reflected and/or transmitted into the body can be utilized in responsive and accurate hand tracking including movement and hand-to-hand touch.

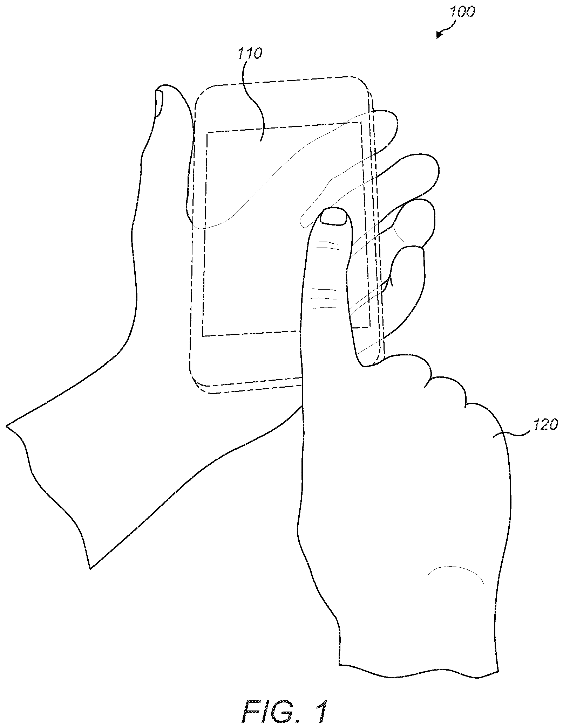

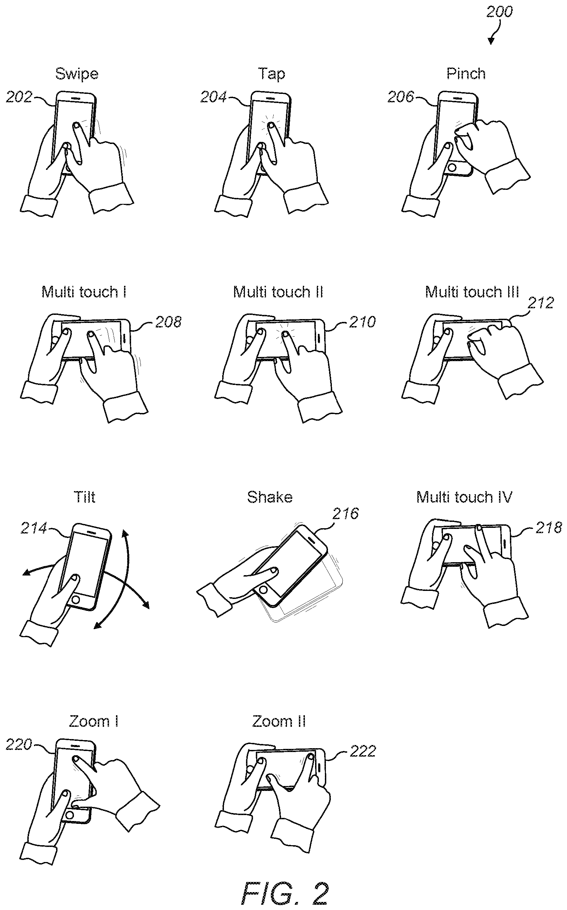

Figure 1 shows a schematic 100 of a traditional portrait orientation holding of a handheld device 110 being actuated by a hand 120. With this configuration, a single-handed swipe could update the AR/VR graphics accordingly with a scroll of the screen or possibly the movement of a slider. Figure 2 shows a schematic 200 of alternative handheld gestures to emulate with mid-air haptics. These include: swipe 202, tap 204, pinch 206, multi-touch 208, 210, 212, 218, tilt 214, shake 216, and zoom 220, 222.

The palm-side of the human hands are very sensitive and an ideal target for ultrasound-based haptics. As such these are the primary focus for interactive zones and instruments. In addition to not requiring peripheral clothing, such as haptic gloves, to enable haptic sensations, there is a valuable privacy element to future AR interactions in public spaces which this method will facilitate. Gestures on the hand still preserve the privacy of the user as the surface hand acts as a guard against revealing specific gestures or content type being explored.

Nonetheless, arms, legs and other body parts of an individual may also be considered surfaces and interaction instruments. For example, it may project some interface elements onto a user's leg while driving to adjust the radio or air-conditioning.

Haptics can either be projected from one or more ultrasound arrays mounted on the user (such as built-in or attached to an HMD, on some other worn, tracked location accessory or from a fixed location mounted in an environment., allowing the haptics to target the active interaction zones. Arrays in the environment can also be mobile, mounted to actuating arms/surfaces or maneuvered with drones or robots.

One key to accomplishing focusing is for all ultrasonic arrays mounted on the body or in the environment to know the location and orientation of each of their transducers at all times. HMDs typically operate at ~100 Hz in "frames", related to the display. For each frame, all ultrasonic arrays in the system will need updated location/orientation information on both their location in the system and the desired focus location (hand, etc.). This can be done with standard optical methods common to HMD's (IR LED's, fiducials, SLAM, etc.) affixed or with a known relative location to the arrays. Alternatively, this could be done with tracking body-suits where the array is mounted at a known relative location. Focus location to create adequate haptics will need to be updated more quickly than the inter-frame time (typically 5 kHz+). This can be done as a pre-programed route that is updated each frame. Alternatively, the array can update the focus location based upon another faster-acting tracker.

In another arrangement, the array can simultaneously send acoustic signals to a known-location microphone pickup which feeds back to the array controller. By measuring changes in amplitude and/or phase at the microphone, this can be used as inter-frame focus location adjustment while waiting for a new frame with tracking updates. In another arrangement, the external microphone can be used to measure reflected sound rather than signals directed precisely at the microphone. Hand shape, orientation, and velocity information from the last frame can be used to model the reflected signal and how it would change with movement. In another arrangement, the reflected signal, along with multiple pickup microphones, could acoustically image the environment, making separate tracking information unnecessary. Any of these arrangements can have signals which are coded to include transmit time and/or array location information.

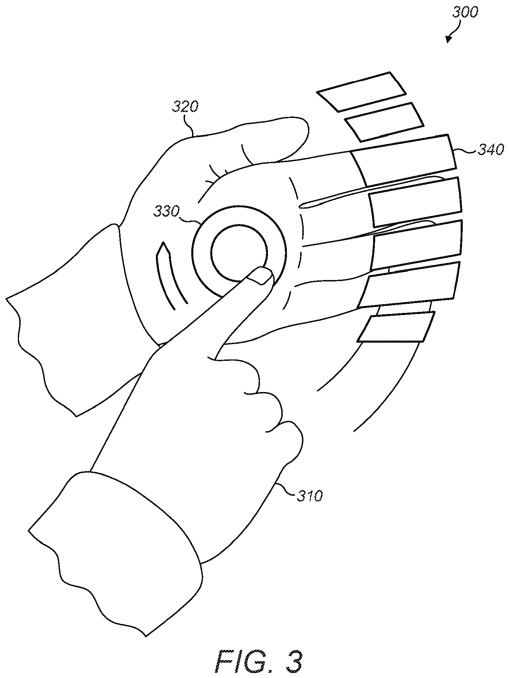

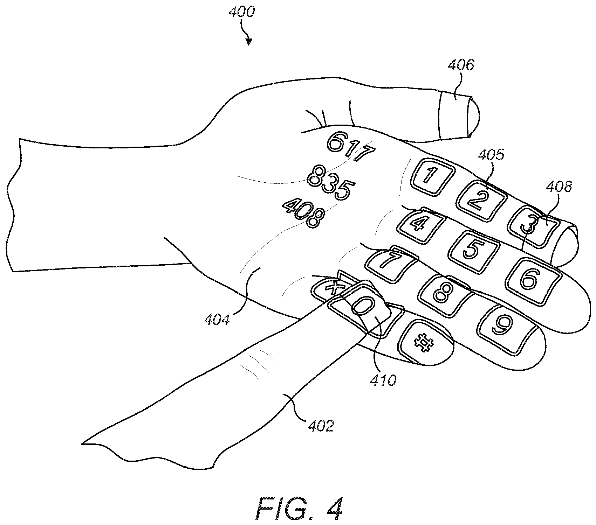

Figures 3 and 4 demonstrate a potential two-handed configuration and how a user might hold their hand, with the palm facing the user. This palm facing inward is what will be referred to as the "surface hand". The user's other hand will be referred to as the "interacting hand" and will be responsible for two-handed interactions involving any interface gestures such as swipes, clicks and pinches. Figure 3 (taken from US Patent Application US 2015/0248787) shows a haptic-based schematic 300 of the interacting hand 310 touching the surface hand 320 via the palm 330 or the finger tips 340. Figure 4 (taken from a Sixth Sense wearable gestural interface) shows a non-haptic-based schematic 400 of the interacting hand 402 touching with the surface hand 404 upon which a numeric pad is projected 405. The hands include trackers 406, 408, 410 to determine positioning and calculate interaction with the projected keyboard.

This surface hand allows for any ultrasound array within range or of viable angle to project haptics onto the hand in coordination with graphics shown in an AR/VR HMD. The result is an interface seemingly projected onto the user's hand that can be interacted with. This is similar to a phone or tablet interface, except with haptics projected onto the surface of the hand to correspond with gestures performed by the user.

One of the significant elements of this method intends that haptics are being applied towards the surface hand, but also activating haptics on the interacting hand as needed. So, a button press, for example would involve a sensation on the surface hand of a button being depressed inward, while a haptic is also applied to the interacting hand's fingertip which is doing the interaction. Some of these haptics can be directed at the interacting hand and some are intended to reflect or splash from the surface hand to be experienced by portions of both hands involved in the interaction (such as the fingertip on one and the palm of the other).

The method of graphic presentation in a mobile haptic experience is not relevant, only that hands and other body parts are being tracked and used to anchor those graphics, whether in a headset display or projected onto the surface of the body part. Also, haptics and interfaces such as those mentioned above do not require graphics to function. A graphic presentation may be presented by an AR headset or other AR equipment and may include holograms. There may or not be graphic presentations along with haptics.

One implementation of this method may include a touchpad like navigation interface which the user can use effectively without graphics directly projected onto the surfaces that are being interacted with. This is similar to moving a mouse cursor on a computer screen while the user is moving the mouse on a desk. In another arrangement, the surface hand could serve as a track pad and the interactive hand could operate just as it would a track pad on a laptop computer. This would include simple taps and dragging gestures but also 2-5 finger interactions such as 2-finger drag, pinch-to-zoom, etc.

Hand-tracking is required to implement these interfaces. This is typically accomplished through optical tracking. While maintaining excellent x-y (image plane) sensitivity, depth sensitivity is very difficult. This method may have trouble differentiating between a finger hovering just above the palm and actually touching. This lack of sensitivity can limit the accuracy of finger-to-palm touch, requiring exaggerated high-energy gestures and limiting its appeal. This problem may be addressed with ultrasound by including skin-coupled microphones. These can be placed in a headset, on the array, or on any number of wearable devices.

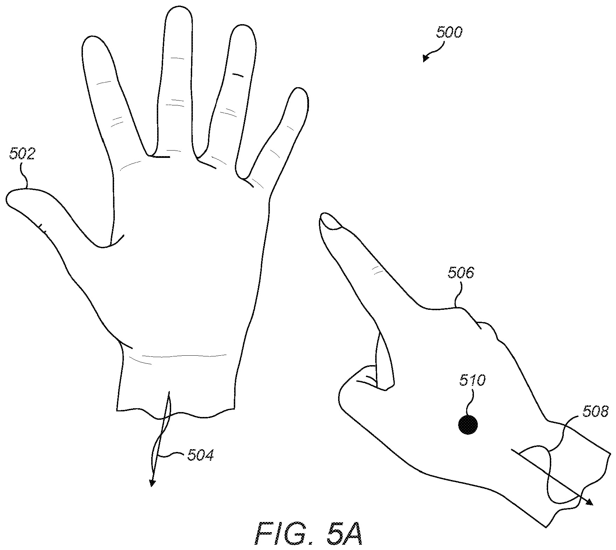

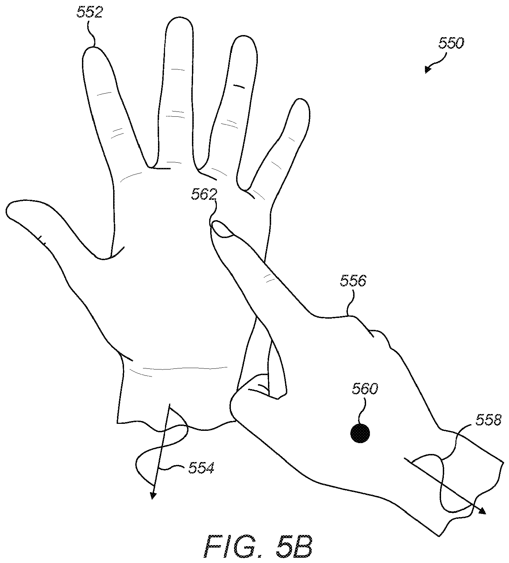

The most basic arrangement of this arrangement being the only one falling under the scope of the claims, is shown in figures 5A and 5B. Figure 5A shows a schematic 500 where the ultrasonic array may send a signal in the form of a focal point 510 onto one hand 506. The focal point 510 (or multiple points) may be targeted at point(s) perpendicular to the normal of the array to maximize coupling into the area. Folded skin or touching fingers could also provide adequate coupling. As a result of the ultrasonic array sending a signal at the focal point 510, a large-amplitude sine wave 508 exists in the one hand 506 but a small-amplitude sine wave 504 exists in the other hand 502. A small-amplitude sine wave.

Figure 5B shows a schematic 550 where the ultrasonic array may send a signal in the form of a focal point 560 onto one hand 556. The focal point 560 (or multiple points) may be targeted at point(s) perpendicular to the normal of the array to maximize coupling into the area. Folded skin or touching fingers could also provide adequate coupling. The one hand 556 is touching the other hand 552 at touch point 562. As a result of the ultrasonic array sending a signal at the focal point 510 and the touch point 562, a large-amplitude sine wave 508 exists in the one hand 556 and a large-amplitude sine wave 554 exists in the other hand 552. This is because ultrasound is coupled through the skin at the touch 562, possibly via bulk transmission

Alternatively, the sound field could be formed into a beam or any shape which maximizes transmitted signal to the desired area. This need not be at a level which produces haptics. A skin-coupled microphone would be placed such that it is more sensitive to acoustic energy on the receive side of the body (in this case the left). This could be achieved by placing it close to the receive hand (in a watch for instance), or having a directional mic placed in a headset. It should be insensitive to airborne ultrasound to avoid conflicting reflected signals (encased in foam for instance). In this arrangement, because of the large acoustic impedance mismatch between air and skin, very little sound would be transferred between hands until they make mechanical contact. When contact occurs, the skin-coupled mic would receive a distinct signal. The signal could employ methods to encode time-of-flight such as phase-keying to avoid various internal or external reflections.

In another arrangement, multiple skin-coupled microphones could be used and coordinated so that relative signals can be used to make a more robust touch detection signal. Also, the degree of mechanical contact (the force of contact) will increase the signal coupling, thus giving a measure of force. In this way, the ultrasound could be used to improve the touch sensitivity of the hand-tracking.

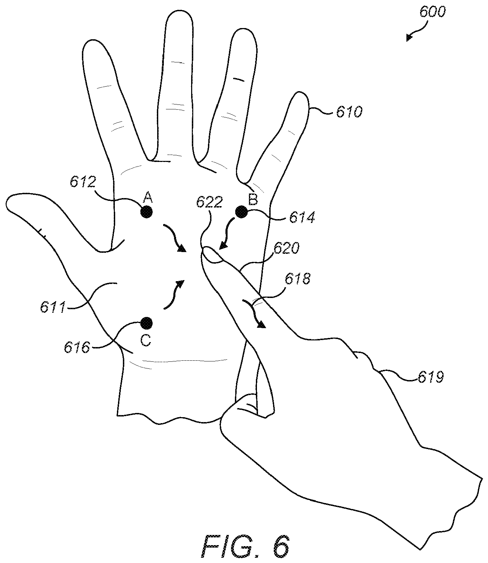

If optical tracking is not present or its accuracy or latency is not sufficient for reliable gesture recognition, acoustics can be used to enable or refine finger-to-palm tracking. One arrangement is in Figure 6, which shows a schematic 600 of a hand 610 with 3 focal points 612, 614, 616 projected onto the palm 611. A skin-coupled microphone would be sensitive to the receive side (in this case the finger 620 of the interactive hand 619). Each focal point 612, 614, 616 is coded in some way (phase key, frequency, etc.). When the finger 620 touches the palm 611 at the touch point 622, it will couple a different amount of acoustic signal depending on the distance from each focal point 612, 614, 616. By separating and evaluating the relative intensity and/or timing of the acoustic signals 618 received into the interactive hand 619, it is possible to deduce the location of the touching finger 620 on the palm 611. This enables both high touch versus hover sensitivity as well as low-latency x-y detection. By using combined signals from each of the focal points, looking at relative magnitude and phase, location can be determined.

More focal points could be used to increase precision and minimize the possibility of the user shadowing one or more with the interactive hand. More redundant signals would also decrease possible errors from reflection or misalignment. The focal points could also be adjusted while the user is interacting to maximize resolution and accuracy.

The method of projecting focal points on a hand and then using an interactive hand/finger to pick up a mechanically-coupled signal and measure that signal with a skin-coupled microphone to determine touch can also be applied to inanimate objects. For instance, a flat table with a projected AR or VR interactive user interface may be considered. In one arrangement, a single focal field is projected onto the surface. This will excite acoustic waves (both bulk and surface) similar to the above description of hand coupling in the table. When an interactive hand touches the table, that acoustic signal is coupled into the hand and could be picked up and analyzed by the skin-coupled microphone. In concert with a hand tracking system, this would give a high-speed, high-fidelity touch versus no-touch tracking. In another arrangement, a multi-point field can be projected onto the interactive surface. Much like the description above describing multi-points onto the palm (Figure 6), when the user touches the surface, the body will couple a signal related to the distance to each projected focal point and the touch location can be determined relative to the focal points.

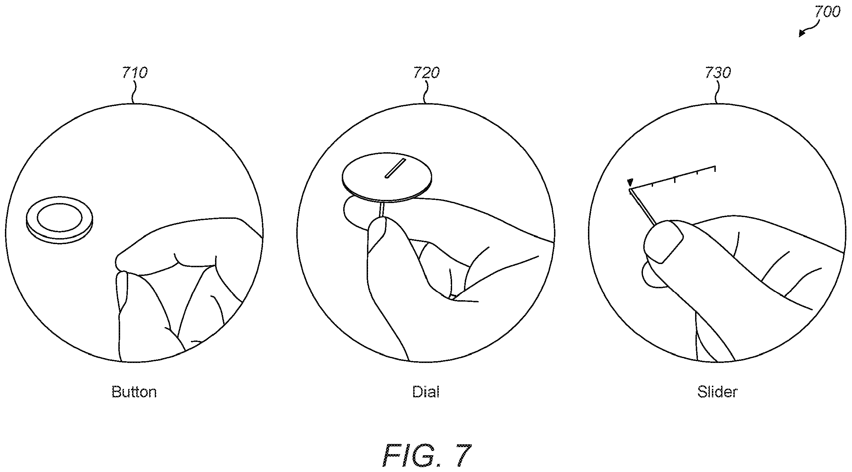

It is not necessary to utilize the palm for control. Figure 7 shows a compilation 700 of some additional gestures possible with a closed hand: a button 710, a dial 720 and a slider 730. (Figure 7 is taken from Google's Project Soli.) The tips of fingers (including the thumb) are very sensitive to ultrasonic haptics and in these gestures, would be targeted for feedback. In one implementation, taps or bumps could be added to dials or scrolls similar to bumps in mouse scroll-wheels. For a button two different pressures of touch could be acknowledged (similar to 3D-touch on Apple devices) by using a haptic tap for one (or both).

### C. Exemplary Features

The following illustrate exemplary features of the foregoing description:
1. Allowing haptics to be projected from mobile locations onto moving targets.
2. Making use of the user's own appendages and other body parts to act as haptic interaction surfaces.
3. Developing haptics that are designed to coordinate haptics on the surface hand as well as the interacting hand simultaneously to generate responsive and intuitive haptic sensations.
4. Using skin-coupled microphones to measure transmitted signals.

### III. Conclusion

While the foregoing descriptions disclose specific values, any other specific values may be used to achieve similar results. Further, the various features of the foregoing embodiments may be selected and combined to produce numerous variations of improved haptic systems.

In the foregoing specification, specific embodiments have been described. However, one of ordinary skill in the art appreciates that various modifications and changes can be made without departing from the scope of the invention as set forth in the claims below. Accordingly, the specification and figures are to be regarded in an illustrative rather than a restrictive sense, and all such modifications are intended to be included within the scope of present teachings.

Moreover, in this document, relational terms such as first and second, top and bottom, and the like may be used solely to distinguish one entity or action from another entity or action without necessarily requiring or implying any actual such relationship or order between such entities or actions. The terms "comprises," "comprising," "has", "having," "includes", "including," "contains", "containing" or any other variation thereof, are intended to cover a non-exclusive inclusion, such that a process, method, article, or apparatus that comprises, has, includes, contains a list of elements does not include only those elements but may include other elements not expressly listed or inherent to such process, method, article, or apparatus. An element proceeded by "comprises ... a", "has ... a", "includes ... a", "contains ... a" does not, without more constraints, preclude the existence of additional identical elements in the process, method, article, or apparatus that comprises, has, includes, contains the element. The terms "a" and "an" are defined as one or more unless explicitly stated otherwise herein. The terms "substantially", "essentially", "approximately", "about" or any other version thereof, are defined as being close to as understood by one of ordinary skill in the art. The term "coupled" as used herein is defined as connected, although not necessarily directly and not necessarily mechanically. A device or structure that is "configured" in a certain way is configured in at least that way but may also be configured in ways that are not listed.

The Abstract of the Disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus, the following claims are hereby incorporated into the Detailed Description, with each claim standing on its own as a separately claimed subject matter.

## Claims

1. A method for providing a tracking information of a body area comprising:
producing an acoustic field from a transducer array having relative positions and
orientations attached to a user; sending by the transducer array an acoustic signal in the form of a focal point targeted to a control point of the body area so as to generate a sine wave in the body area; dynamically updating the relative position and orientation of the transducer array as the user moves; and dynamically updating the position of the focal point as the user moves; wherein the user is wearing at least one skin-coupled microphone, and the amplitude of the sine wave is measured by the at least one skin-coupled microphone to provide said tracking information of the body area.

2. The method as in claim 1, wherein the position and orientation information is provided by at least one of an optical tracking system, an accelerometer tracking system and a tracking system worn by the user.

3. The method as in claim 1, wherein the acoustic field is produced by a mid-air haptic feedback system.

4. The method as in claim 3, wherein the mid-air haptic feedback system is coordinated with at least one of graphics provided by a head-mounted display and gestures made by the user.

5. The method as in claim 4, wherein the graphics include an interactive user interface.

6. The method as in claim 4, wherein the gestures use a palm of the user as a track-pad control interface.

7. The method as in claim 1, wherein the user is wearing two or more skin-coupled microphones.

## Patentansprüche

1. Verfahren zum Bereitstellen einer Verfolgungsinformation eines Körperbereichs, umfassend: Erzeugen eines akustischen Felds von einem Wandlerarray mit relativen Positionen und Ausrichtungen, das an einem Nutzer angebracht ist, Senden durch das Wandlerarray eines akustischen Signals in der Form eines Fokalpunkts, der auf einen Kontrollpunkt des Körperbereichs gerichtet ist, so dass eine Sinuswelle im Körperbereich erzeugt wird, dynamisches Aktualisieren der relativen Position und Ausrichtung des Wandlerarrays, wenn sich der Nutzer bewegt, und dynamischen Aktualisieren der Position des Fokalpunkts, wenn sich der Nutzer bewegt, wobei der Nutzer wenigstens ein körpergebundenes Mikrophon trägt und die Amplitude der Sinuswelle durch das wenigstens eine körpergebundene Mikrophon gemessen wird, um die Verfolgungsinformation des Körperbereichs bereitzustellen.

2. Verfahren nach Anspruch 1, wobei die Positions- und Orientierungsinformationen durch wenigstens eines von einem optischen Verfolgungssystem, einem Beschleunigungsmesser-Verfolgungssystem und einem vom Benutzer getragenen Verfolgungssystem bereitgestellt werden.

3. Verfahren nach Anspruch 1, wobei das akustische Feld durch ein haptisches Rückkopplungssystem in der Luft erzeugt wird.

4. Verfahren nach Anspruch 3, wobei das haptische Feedbacksystem in der Luft mit einer Grafik, die von einem am Kopf montierten Display bereitgestellt wird, und/oder Gesten, die vom Benutzer gemacht werden, koordiniert ist.

5. Verfahren nach Anspruch 4, wobei die Grafiken eine interaktive Benutzerschnittstelle umfassen.

6. Verfahren nach Anspruch 4, wobei die Gesten eine Handfläche des Benutzers als Spurfeld-Steuerschnittstelle verwenden.

7. Verfahren nach Anspruch 1, wobei der Nutzer zwei oder mehr körpergebundene Mikrophone trägt.

## Revendications

1. Procédé de fourniture d'une information de suivi d'une zone corporelle comprenant : la production d'un champ acoustique à partir d'un réseau de transducteurs ayant des positions et des orientations relatives attaché à un utilisateur ; l'envoi par le réseau de transducteurs d'un signal acoustique sous la forme d'un point focal ciblé sur un point de contrôle de la zone corporelle de façon à générer une onde sinusoïdale dans la zone corporelle ; l'actualisation dynamique de la position et de l'orientation relatives du réseau de transducteurs à mesure que l'utilisateur bouge ; et l'actualisation dynamique de la position du point focal à mesure que l'utilisateur bouge ; dans lequel l'utilisateur porte au moins un microphone couplé à la peau, et l'amplitude de l'onde sinusoïdale est mesurée par l'au moins un microphone couplé à la peau pour fournir ladite information de suivi de la zone corporelle.

2. Procédé selon la revendication 1, dans lequel l'information de position et d'orientation est fournie par au moins l'un parmi un système de suivi optique, un système de suivi par accéléromètre et un système de suivi porté par l'utilisateur.

3. Procédé selon la revendication 1, dans lequel le champ acoustique est produit par un système de retour haptique aérien.

4. Procédé selon la revendication 3, dans lequel le système de retour haptique aérien est coordonné avec au moins l'un parmi des graphismes fournis par un visiocasque et des gestes faits par l'utilisateur.

5. Procédé selon la revendication 4, dans lequel les graphismes comportent une interface utilisateur interactive.

6. Procédé selon la revendication 4, dans lequel les gestes utilisent une paume de l'utilisateur en tant qu'interface de contrôle à pavé tactile.

7. Procédé selon la revendication 1, dans lequel l'utilisateur porte deux ou plus microphones couplés à la peau.
